# FASCICULE DE BREVET EUROPEEN

(11) **EP 1 397 292 B1**
(45) Date de publication et mention de la délivrance du brevet: **09.01.2008**
(21) Numéro de dépôt: 02745498.2
(22) Date de dépôt: 07.06.2002
(51) Int. Cl.: B65B 9/04, B65B 61/06, B65D 77/20

(54) **PROCEDE ET INSTALLATION DE FABRICATION ET DE REMPLISSAGE DE RECIPIENTS AYANT UN OPERCULE MUNI D'UNE LANGUETTE DE PREHENSION**
VERFAHREN UND VORRICHTUNG ZUM HERSTELLEN UND FÜLLEN VON BEHÄLTERN, VERSEHEN MIT EINER VERSCHLUSSFOLIE MIT GRIFFLASCHE
METHOD AND INSTALLATION FOR MAKING AND FILLING CONTAINERS HAVING MEMBRANE SEAL PROVIDED WITH A PULL TAB

(30) Priorité: 08.06.2001 FR 0107501
(43) Date de publication de la demande: 17.03.2004
(73) Titulaire: ERCA FORMSEAL, 91940 Les Ulis Cedex (FR)
(72) Inventeur: SCHWAB, Dominique, 78000 Versailles (FR)
(74) Mandataire: Intes, Didier Gérard André
(86) Numéro de dépôt international: PCT/FR2002/001954
(87) Numéro de publication internationale: WO 2002/100721

(56) Documents cités:
- EP-A- 0 403 393
- DE-A- 19 524 427
- FR-A- 1 488 333
- US-A- 3 069 273

## Description

La présente invention concerne un procédé de fabrication et de remplissage de récipients, dans lequel on réalise des récipients par thermoformage dans une bande de matériau thermoplastique, on remplit ces récipients, on applique une bande à opercules sur la bande de matériau thermoplastique, on fixe la bande à opercules sur le bord de chaque récipient de manière à former un opercule par récipient, on découpe les récipients et leurs opercules de la bande de matériau thermoplastique et de la bande à opercules, et on sépare les récipients et leurs opercules desdites bandes (voir par exemple FR-A-1 488 333).

L'invention concerne également une installation de fabrication et de remplissage de récipients comprenant une station de thermoformage de récipients dans une bande de matériau thermoplastique, une station de remplissage des récipients, des moyens pour appliquer une bande à opercules sur la bande de matériau thermoplastique et pour fixer la bande à opercules sur le bord de chaque récipient de manière à former un opercule par récipient, des moyens pour découper les récipients et leurs opercules de la bande de matériau thermoplastique et de la bande à opercules et des moyens pour séparer les récipients et leurs opercules desdites bandes.

Il est connu d'appliquer la bande à opercules contre la bande de matériau thermoplastique, de sceller ces bandes entre elles, par exemple par thermocollage, sur le rebord de chaque récipient, avant de réaliser une opération de découpe dans laquelle on découpe simultanément les deux bandes sur toute leur épaisseur et de séparer les récipients des bandes découpées qui constituent une grille de déchets.

Lorsque les récipients sont destinés à être présentés par groupes d'au moins deux récipients reliés par une ligne de liaison, on prend soin de réaliser la découpe en préservant cette ligne de liaison, auquel cas seule la bande à opercules est découpée sur le tracé correspondant à la ligne de liaison.

Que les récipients soient présentés individuellement ou en groupes, l'opercule de chaque récipient s'étend en travers du bord supérieur du récipient sans dépasser par rapport à ce bord, c'est-à-dire que la limite du bord et celle de l'opercule coïncident.

Pour ouvrir les récipients et consommer le produit qu'ils contiennent (par exemple un produit alimentaire tel qu'un yogourt, une compote ou une boisson), il est nécessaire de détacher l'opercule de chaque récipient.

On s'arrange en général pour, dans une région du bord du récipient, réaliser le scellement de l'opercule à quelque distance de la limite de ce bord en ménageant ainsi une languette de préhension. Dans la mesure où la limite du bord du récipient et celle de l'opercule coïncident, il faut parvenir à soulever cette languette par rapport au bord du récipient, par exemple en insérant l'ongle entre la languette et le bord, avant de saisir la languette et de la tirer pour détacher l'opercule du récipient.

Cette opération est fastidieuse et demande une adresse que ne possèdent pas certaines personnes, par exemple les enfants ou les personnes âgées.

De plus, la dimension de la languette est limitée par la forme du bord du récipient et elle ne fournit pas toujours à l'utilisateur une surface de prise assez importante pour qu'il puisse aisément détacher l'opercule du récipient.

Il existe des récipients dont l'opercule présente une languette dépassante, qui est rabattue contre la paroi du récipient. Cette languette peut être facilement soulevée et elle offre généralement une surface de prise suffisante pour être aisément détachée du récipient.

Ce type d'opercule se présente sous la forme d'un couvercle relativement rigide, par exemple en aluminium, qui est découpé avant d'être mis en place sur le récipient et qui est serti autour d'un bourrelet que présente ce bord.

Ces récipients à bourrelet et ces opercules rigides conduisent à des prix de revient élevés car les récipients ne peuvent pas être fabriqués par thermoformage à des cadences importantes et les couvercles doivent être mis en place et sertis individuellement.

La présente invention a pour but de proposer un procédé et une installation de thermoformage exempts des inconvénients précités.

Ce but est atteint avec le procédé selon l'invention grâce au fait que, avant d'appliquer la bande à opercules sur la bande de matériau thermoplastique, on réalise, pour chaque récipient, une découpe préliminaire dans la bande de matériau thermoplastique définissant une partie du pourtour du bord du récipient et au fait que, lors de la découpe des récipients et de leurs opercules, on réalise pour chaque récipient une découpe traversante de l'ensemble constitué par la bande de matériau thermoplastique et par la bande à opercules selon une portion de la partie restante du pourtour du récipient et on réalise une découpe complémentaire, qui traverse seulement la bande à opercules, qui est raccordée à ladite découpe traversante et qui délimite pour chaque récipient une portion de la bande à opercules s'étendant au-delà de la découpe préliminaire de manière à former une languette de préhension de l'opercule du récipient.

Le but de l'invention est atteint avec l'installation selon l'invention grâce au fait qu'elle comprend une station de découpe préliminaire disposée, dans le sens d'avancement de la bande de matériau thermoplastique, en amont des moyens pour appliquer la bande à opercules sur ladite bande, cette station comprenant un outil de découpe préliminaire apte à réaliser, pour chaque récipient une découpe préliminaire dans la bande de matériau thermoplastique définissant une partie du pourtour du bord du récipient, et au fait qu'elle comprend, en outre, disposés en aval des moyens pour appliquer la bande à opercules sur la bande de matériau thermoplastique, des moyens pour réaliser, pour chaque récipient, une découpe traversante de l'ensemble constitué par la bande de matériau thermoplastique et par la bande à opercules selon une portion de la partie restante du pourtour du récipient et des moyens pour réaliser, pour chaque récipient, une découpe complémentaire, qui traverse seulement la bande à opercules, qui est raccordée à ladite découpe traversante et qui délimite pour chaque récipient, une portion de la bande à opercules s'étendant au-delà de la découpe préliminaire de manière à former une languette de préhension de l'opercule du récipient.

Avec l'invention, pour chaque récipient, le contour du récipient (ou, plus précisément, le contour du rebord du récipient resté sensiblement dans le plan de la bande thermoplastique, vers l'intérieur de la découpe préliminaire) et celui de son opercule sont différents, l'opercule présentant une languette qui dépasse par rapport au bord du récipient. Cette languette est réalisée par la combinaison astucieuse de la découpe préliminaire réalisée avant la mise en place de la bande à opercules et des découpes traversantes et complémentaires réalisées après cette mise en place. L'invention ne pénalise pas les cadences de production et, en particulier, elle permet la réalisation des opercules par découpe à partir de la bande à opercules, après la pose de cette dernière sur la bande thermoplastique et la fixation des opercules par les processus classiquement retenus pour des cadences de fabrication élevées, par exemple par thermocollage ou thermoscellage.

Le fait que la découpe complémentaire traverse seulement la bande à opercules permet de ne pas séparer de la bande de matériau thermoplastique la région de cette bande qui se trouve entre la découpe préliminaire et la découpe complémentaire. De cette manière, cette région appartient à la grille de déchets de la bande thermoplastique et est entraînée avec elle lors de la séparation des récipients.

Avantageusement, la découpe préliminaire est formée par une incision. Pour cela, l'outil de découpe préliminaire présente une arête de découpe préliminaire délimitant une ligne ouverte plutôt qu'un contour formé.

Dans ce cas, la découpe préliminaire ne génère aucun déchet, de sorte qu'aucun moyen d'évacuation de déchets n'est nécessaire du fait de cette découpe et, même une fois qu'elle présente les découpes préliminaires, la bande thermoplastique peut parfaitement être traitée comme une bande thermoplastique pleine.

Avantageusement, on réalise simultanément la découpe traversante et la découpe complémentaire, sans qu'une étape spécifique soit nécessaire pour chacune de ces découpes.

Ainsi, avantageusement, l'installation comprend une station de découpe finale ayant un outil de découpe et un contre-outil respectivement disposés au-dessus et en dessous de l'ensemble constitué par la bande de matériau thermoplastique et par la bande à opercules, l'outil de découpe présentant une arête de découpe traversante apte à coopérer avec ledit contre-outil pour former la découpe traversante et une arête de découpe complémentaire qui est disposée en retrait vers le haut par rapport à l'arête de découpe traversante.

L'outil comprenant l'arête de découpe complémentaire et l'arête de découpe traversante est donc actionné comme un tout, de la même manière qu'un outil de découpe classique.

Dans ce cas, avantageusement, l'ensemble constitué par l'arête de découpe traversante et par l'arête de découpe complémentaire forme une arête continue, délimitant un contour fermé. Ces deux arêtes peuvent être faites en une seule pièce et se distinguer l'une de l'autre par leur différence de niveau, le passage d'un niveau à l'autre pouvant être graduel ou former un ressaut.

L'invention sera bien comprise et ses avantages apparaîtront mieux à la lecture de la description détaillée qui suit, d'un mode de réalisation présenté à titre d'exemple non limitatif.

La description se réfère aux dessins annexés sur lesquels :
- la figure 1 est une vue schématique d'une installation conforme à l'invention ;
- les figures 2, 3 et 4 sont des vues partielles de dessus de la bande thermoplastique illustrant trois étapes successives du procédé conforme à l'invention ;
- la figure 5 est une vue de dessus d'un récipient
- la figure 6 est une vue de côté du récipient de la figure 5 ;
- la figure 7 montre un outil servant à réaliser en même temps la découpe traversante et la découpe complémentaire ; et
- les figures 8 et 9 sont des coupes prises respectivement selon les lignes VIII-VIII et IX-IX de la figure 7.

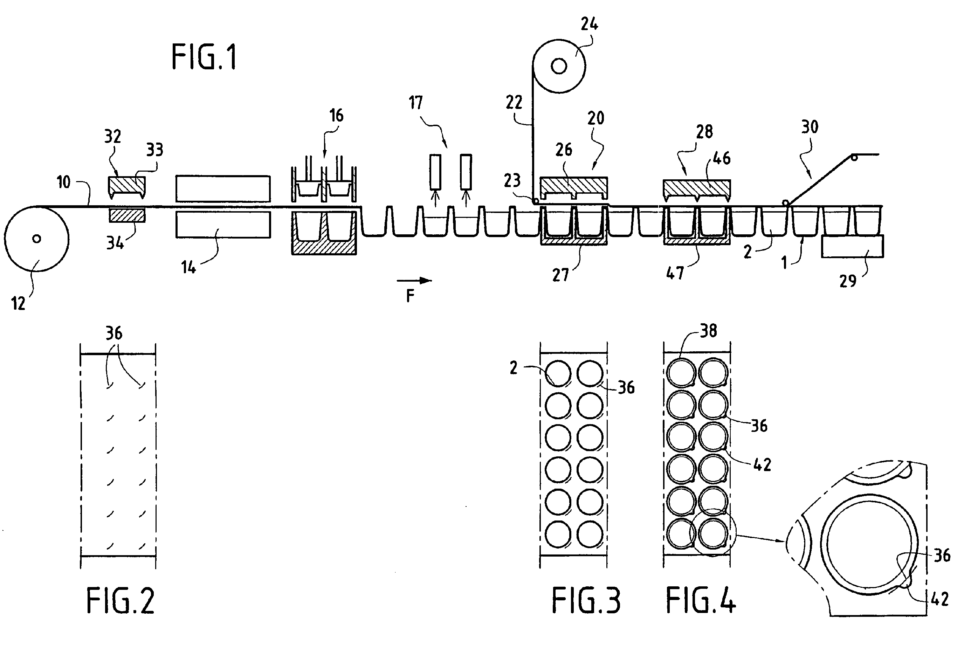

L'installation de la figure 1 sert à thermoformer des récipients à partir d'une bande thermoplastique 10, à remplir ces récipients avec un produit tel qu'un produit liquide, pâteux ou gélatineux (en particulier un produit alimentaire) et à fermer les récipients remplis.

Cette installation comporte une bobine 12 à partir de laquelle est déroulée la bande thermoplastique 10 qui traverse, en général horizontalement, toute l'installation en étant entraînée pas à pas par des moyens de soutien et d'entraînement (non représentés).

Dans toute la suite, le sens de l'amont vers l'aval désigné par la flèche F doit être entendu comme désignant le sens d'avancement de la bande à travers les diverses stations successives de l'installation.

Ainsi, dans le sens de la flèche F, cette installation comporte successivement une boîte de chauffe 14 qui sert à porter la bande thermoplastique à la température de thermoformage, une station de thermoformage 16 dans laquelle les récipients sont thermoformés et, éventuellement, banderolés, une station de dosage et de remplissage de récipients 17, une station de fermeture des récipients 20, dans laquelle une bande à opercules 22 déroulée à partir d'une bobine 24 est disposée sur l'extrémité supérieure ouverte des récipients, contre la face supérieure de la bande thermoplastique 10 et est scellée sur les rebords des récipients à l'aide d'un outil de scellement 26. En aval de la station 20, l'installation comporte une station de découpe 28 dans laquelle les récipients sont découpés, par groupes ou individuellement, à partir de la bande puis une station 30 dans laquelle la grille de déchets constituée par les portions des bandes 10 et 22 découpées des récipients est séparée de ces derniers, et dans laquelle des récipients sont conditionnés et palettisés.

Dans la station 20 ou juste avant cette dernière, la bande à opercules 22 est appliquée contre la bande thermoplastique par des moyens comprenant par exemple des galets de renvoi 23. L'outil de scellement 26 qui est disposé au-dessus des bandes 22 et 10, de même que son contre-outil 27 disposé en dessous des récipients, sont déplaçables verticalement pour venir pincer entre eux les bords des récipients de manière à effectuer un scellement de la bande à opercules sur la bande thermoplastique, par exemple par thermocollage.

L'installation comporte en outre une station de découpe préliminaire 32 qui est disposée en amont de la station de fermeture des récipients 20. Dans l'exemple représenté, cette station 32 est même disposée en amont de la boîte de chauffe 14.

De manière générale, il est avantageux que la station de découpe préliminaire 32 soit disposée en amont de la station de thermoformage 16. En effet, cette station 32 comporte un outil de découpe 33 et un contre-outil 34 qui sont disposés de part et d'autre de la bande 10 et qui sont écartés l'un de l'autre pour permettre l'avancement de cette bande, tandis qu'ils sont rapprochés l'un de l'autre pour réaliser la découpe. Le fait de disposer la station 32 avant la station de thermoformage permet de simplifier la conformation de cet outil et de ce contre-outil et de faire en sorte qu'un déplacement vers le bas, d'amplitude relativement faible, de celui de ces outil et contre-outil qui est situé sous la bande suffise pour permettre l'avancement de cette dernière, car, à cet endroit, la bande ne présente pas encore les saillies vers le bas que constituent les corps des récipients thermoformés.

On peut toutefois préférer disposer de la station de découpe préliminaire en aval de la station de thermoformage, l'essentiel étant qu'elle se trouve en amont du point de jonction entre la bande 22 et la bande 10.

Avantageusement, la découpe est réalisée à chaud, c'est-à-dire que, dans la station 32, au moins les couteaux de découpes sont chauffés. De ce fait, ces couteaux sont stériles et l'installation peut être de type "ultra-propre".

Dans l'exemple représenté, on a choisi de disposer l'outil de découpe préliminaire 33 au-dessus de la bande 10, tandis que le contre-outil 34 est disposé en dessous de cette bande. On a également choisi de représenter le cas où deux rangées de récipients sont fabriquées à chaque pas d'avancement de la bande. Ainsi, la station de thermoformage comprend deux rangées de chambres de thermoformage et de pistons de thermoformage.

De même, l'outil de découpe préliminaire comprend deux rangées de couteaux de découpe, un par récipient fabriqué à chaque pas d'avancement.

La figure 2 montre l'aspect de la bande au sortir de la station de découpe préliminaire 32. On voit que l'outil de découpe préliminaire a réalisé, pour chaque récipient, une découpe préliminaire 36 dans la bande 10. Ces découpes 36 se présentent sous la forme de simples incisions traversant la bande 10. Ainsi, aucun déchet n'est généré dans la bande par la découpe préliminaire.

La figure 3 montre l'aspect de la bande au sortir de la station de thermoformage 16. On voit que deux rangées de corps de récipients 2 ont été thermoformées dans la bande. Une découpe préliminaire 36 se trouve à côté de chacun d'entre eux.

La figure 4 montre l'aspect de la bande au sortir de la station de découpe 28. On voit qu'une découpe 38 a été réalisée autour de chaque récipient. La bande à opercules 22 ayant été disposée sur les ouvertures supérieures des récipients, les découpes préliminaires 36 figurent en trait fin sur la partie agrandie de la figure 4 car elles sont masquées par cette bande.

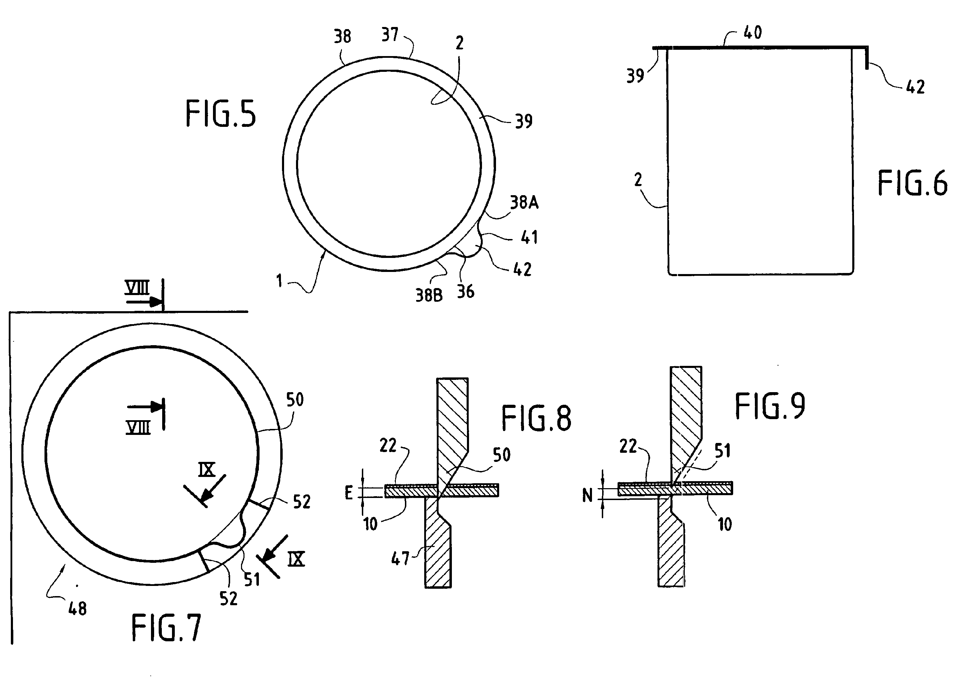

La figure 5 montre, en vue de dessus, un récipient 1 détaché de la grille de déchets des bandes 10 et 22.

Le bord du récipient forme une collerette transversale 39 qui, lors du thermoformage, est disposée dans le plan de la bande thermoplastique 10. Le pourtour de ce bord présente une première portion 37 constituée par la portion de la découpe 38 qui s'étend du côté du corps 2 du récipient par rapport à la découpe préliminaire 36, entre les points 38A et 38B auxquels la découpe 38 et la découpe préliminaire 36 se rencontrent. La deuxième portion du pourtour du bord du récipient est formée par la découpe préliminaire 36.

L'opercule 40 est disposé sur le bord du récipient 39, en travers de l'ouverture de ce dernier. Le pourtour de l'opercule présente une première portion sur laquelle il coïncide avec la première portion 37 du pourtour du bord du récipient. Il présente également une deuxième portion 41 délimitée par la partie de la découpe 38 qui s'étend de l'autre côté de la découpe préliminaire 36 par rapport au corps du récipient. Ainsi, entre la découpe préliminaire 36 et la deuxième portion 41 du pourtour de l'opercule, celui-ci forme une languette 42 de préhension, qui est formée seulement dans la bande à opercules et qui constitue une surface de prise pour tirer et arracher l'opercule 40 par rapport au récipient de manière à ouvrir ce dernier. Comme on le voit sur la figure 6, la languette 42 est rabattue contre la paroi du corps 2 du récipient, ou tout au moins vers cette paroi.

Sur la portion 37, les pourtours du bord du récipient et de l'opercule sont communs. Ils sont réalisés par une découpe traversante, dans la station 28, de l'ensemble constitué par la bande de matériau thermoplastique 10 et par la bande à opercules 22 superposées. Ainsi, la partie 37 de la découpe 38 correspond à une découpe traversante. Cette découpe traversante s'étend, vers la découpe préliminaire 36, au moins jusqu'à rencontrer cette découpe. Elle peut s'étendre très légèrement au-delà de la découpe préliminaire 36 vers la languette 42 pour faciliter la séparation du récipient de la grille de déchets.

Le pourtour 41 de la languette est quant à lui formé par une découpe complémentaire qui traverse seulement la bande à opercules 22 et qui est raccordée à la découpe traversante 37.

La partie de la bande thermoplastique 10 qui se trouve sous la languette 42 dans la station de découpe 28 est séparée du corps du récipient par la découpe préliminaire 36 et appartient à la grille de déchets. Dans ce cas, lors de la séparation des récipients par rapport à la grille de déchets, cette portion de la bande 10 est naturellement séparée du récipient, et la languette 42 comprend finalement une seule épaisseur qui est celle de la bande à opercules. Le scellement de la bande à opercules sur le bord du récipient est effectué seulement sur le rebord 39 de ce dernier, selon une ligne de scellement qui, dans la région de la découpe préliminaire 36, s'étend seulement du côté de cette découpe qui est opposé à la languette 42.

On évite ainsi de générer sous la languette un déchet séparé de la grille de déchets, tout en permettant à la languette de présenter seulement l'épaisseur de l'opercule de sorte que cette languette est souple et peut être aisément rabattue contre le récipient et présenter des dimensions relativement importantes sans gêner le conditionnement ultérieur du récipient.

La station de découpe 28 de la figure 1 est une station de découpe finale dans laquelle la découpe traversante 37 et la découpe complémentaire 41 sont réalisées simultanément. De manière classique, cette station de découpe comprend un outil de découpe 46 et un contre-outil de découpe 47 qui sont disposés de part et d'autre des bandes 10 et 22. Le contre-outil 47 est disposé du côté inférieur de la bande 10 et il est mobile entre une position basse dans laquelle il est déplacé vers le bas sur une distance légèrement supérieure à la profondeur des récipients pour permettre l'avancement de la bande thermoplastique et une position haute dans laquelle ii coopère avec la face inférieure de cette bande entre les récipients. L'outil 46 est mobile entre une position inactive dans laquelle il est légèrement déplacé vers le haut pour permettre l'avancement de la bande thermoplastique et une position active de découpe dans laquelle il est déplacé vers le bas pour coopérer avec le contre-outil 47 et découper les bandes 10 et 22.

La figure 7 est une vue partielle de dessous de l'outil de découpe 46 et montre un couteau de découpe 48 servant à réaliser une ligne de découpe 38. Ce couteau présente une arête de découpe traversante 50 qui sert à former la découpe traversante 37- et une arête de découpe complémentaire 51 qui sert à former la découpe complémentaire 41. Les figures 8 et 9 sont des coupes, respectivement dans la région des arêtes 50 et 51. Pour davantage de clarté, elles montrent non seulement ces arêtes, mais également le contre-outil 47 et la position de l'ensemble constitué par la bande de matériau thermoplastique 10 et par la bande à opercules 22 dans la station de découpe finale. On comprend que l'arête de découpe complémentaire est disposée en retrait vers le haut par rapport à l'arête de découpe traversante. La différence de niveau entre ces deux arêtes est choisie pour que, en position basse de l'outil de découpe, l'arête 50 traverse l'épaisseur des bandes 10 et 22 superposées, tandis que l'arête 51 traverse seulement l'épaisseur de la bande à opercules 22. La différence de niveau N entre les deux arêtes est par exemple sensiblement égale à l'épaisseur E de la bande 10. Bien entendu, l'arête 51 peut entailler légèrement l'épaisseur de la bande 10, mais sans la traverser.

La différence de niveau entre les arêtes 50 et 51 peut être obtenue par des ressauts 52, ou bien peut être progressive.

On voit sur la figure 7 que l'ensemble formé par l'arête de découpe traversante 50 et par l'arête de découpe complémentaire 51 forme une arête continue qui délimite un contour fermé.

En revanche, l'outil de découpe préliminaire présente une arête de découpe préliminaire délimitant une ligne ouverte. Il s'agit par exemple d'un arc de cercle ou d'un segment rectiligne. De préférence, cette arête de découpe préliminaire présente un rayon de courbure qui est supérieur au rayon de courbure courant de l'arête de découpe traversante 50. On s'assure ainsi que la découpe traversante opérée dans la station 28 rencontre la découpe préliminaire, même si un léger décalage dans la bande apparaît en raison des tolérances de fabrication. D'ailleurs, comme on le voit sur la vue agrandie de la figure 4, la découpe préliminaire 36 s'étend sur une longueur plus grande que la partie du pourtour du bord du récipient comprise entre les points 38A et 38B (comparer figure 4 et figure 5).

La ligne de découpe préliminaire et la ligne de découpe traversante sont avantageusement réalisées de telle sorte que la deuxième portion du pourtour du bord du récipient formé par la découpe préliminaire 36 se raccorde sensiblement tangentiellement à la première portion 37 de ce pourtour, comme le montre la figure 5. On comprend également en considérant la figure 5, que la deuxième portion du pourtour du bord du récipient formée par la découpe préliminaire 36 présente une rayon de courbure supérieur au rayon de courbure du plus grand cercle inscrit dans le pourtour du bord du récipient.

Selon le procédé de l'invention, on réalise la découpe préliminaire 36 soit avant le thermoformage des récipients, soit après ce thermoformage, mais avant d'appliquer la bande 22 sur la bande 10.

Avantageusement, le procédé comprend une étape dans laquelle on rabat les languettes de préhension 42 vers la paroi des récipients et l'installation comprend des moyens à cet effet. Par exemple, on peut prévoir que l'installation comporte un système de doigts déplaçables verticalement au-dessus de la table de palletisation 29 entre une position basse dans laquelle ils coopèrent avec les languettes d'un groupe de récipients pour les ramener vers le bas, et une position haute dans laquelle ils permettent l'enlèvement des récipients dans la table 29. On peut également prévoir de séparer la grille de déchets, non pas en la soulevant par rapport aux récipients comme le montre la figure 1, mais en la déplaçant vers le bas, auquel cas le déplacement peut entraîner avec lui, vers le bas, les languettes. A cet effet, on peut prévoir que les languettes restent liées par un très faible point d'attache à la grille de déchets, ce point d'attache étant rompu lors de la séparation de la grille de déchets et des récipients. L'arête 51 peut être conformée de manière à présenter une interruption très courte formant ce point d'attache.

Une partie du pourtour de chaque récipient est formée, comme indiqué précédemment, par la découpe préliminaire 36. Selon une première variante, les récipients étant destinés à être présentés individuellement, on réalise la découpe traversante 37 sur l'intégralité de la partie restante du pourtour de chaque récipient.

Selon une deuxième variante, les récipients étant destinés à être présentés par groupe d'au moins deux récipients reliés entre eux par au moins une ligne de liaison, on réalise la découpe traversante sur l'intégralité de la partie restante du pourtour de chaque récipient à l'exception de cette ligne de liaison et on réalise la découpe complémentaire selon un tracé comprenant cette ligne de liaison. Dans ce cas, sur la ligne de liaison, la découpe complémentaire peut affecter une partie de l'épaisseur de la bande thermoplastique 10 de manière à créer une zone de faiblesse qui permet la séparation des récipients les uns par rapport aux autres pour consommer le produit qu'ils contiennent.

## Revendications

1. Procédé de fabrication et de remplissage de récipients, dans lequel on réalise des récipients (1) par thermoformage dans une bande de matériau thermoplastique (10), on remplit (17) ces récipients, on applique une bande à opercules (22) sur la bande de matériau thermoplastique, on fixe la bande à opercules sur le bord de chaque récipient (1) de manière à former un opercule (40) par récipient, on découpe les récipients et leurs opercules de la bande de matériau thermoplastique (10) et de la bande à opercules (22) et on sépare les récipients et leurs opercules desdites bandes, **caractérisé en ce que** avant d'appliquer la bande à opercules (22) sur la bande de matériau thermoplastique (10), on réalise, pour chaque récipient, une découpe préliminaire (36) dans la bande de matériau thermoplastique (10) définissant une partie du pourtour du bord du récipient,
lors de la découpe des récipients (1) et de leurs opercules (40), on réalise pour chaque récipient une découpe traversante (37) de l'ensemble constitué par la bande de matériau thermoplastique (10) et par la bande à opercules (22) selon une portion de la partie restante du pourtour du récipient et on réalise une découpe complémentaire (41), qui traverse seulement la bande à opercules (22), qui est raccordée à ladite découpe traversante (37) et qui délimite pour chaque récipient une portion de la bande à opercules s'étendant au-delà de la découpe préliminaire de manière à former une languette (42) de préhension de l'opercule du récipient.

2. Procédé selon la revendication 1, **caractérisé en ce que** la découpe préliminaire (36) est formée par une incision.

3. Procédé selon la revendication 1 ou 2, **caractérisé en ce qu'**on réalise simultanément la découpe traversante (37) et la découpe complémentaire (41).

4. Procédé selon l'une quelconque des revendications 1 à 3, **caractérisé en ce qu'**on réalise la découpe préliminaire (36) avant le thermoformage des récipients.

5. Procédé selon l'une quelconque des revendications 1 à 3, **caractérisé en ce qu'**on réalise la découpe préliminaire (36) après le thermoformage des récipients.

6. Procédé selon l'une quelconque des revendications 1 à 5, **caractérisé en ce qu'**on réalise les découpes de telle sorte que la découpe préliminaire (36) et la découpe complémentaire (41) se raccordent sensiblement tangentiellement à la découpe traversante (37).

7. Procédé selon l'une quelconque des revendications 1 à 6, **caractérisé en ce qu'**on rabat les languettes de préhension (42) vers la paroi des récipients.

8. Procédé selon l'une quelconque des revendications 1 à 7, **caractérisé en ce que** les récipients étant destinés à être présentés individuellement, on réalise la découpe traversante (37) sur l'intégralité du pourtour de chaque récipient (1) de la partie restante.

9. Procédé selon l'une quelconque des revendications 1 à 7, **caractérisé en ce que**, les récipients (1) étant destinés à être présentés par groupes d'au moins deux récipients reliés entre eux par au moins une ligne de liaison, on réalise la découpe traversante sur l'intégralité de la partie restante du pourtour de chaque récipient à l'exception de ladite ligne de liaison, et on réalise la découpe complémentaire selon un tracé comprenant cette ligne de liaison.

10. Installation de fabrication et de remplissage de récipients comprenant une station (16) de thermoformage de récipients dans une bande de matériau thermoplastique (10), une station (17) de remplissage des récipients, des moyens (23, 26, 27) pour appliquer une bande à opercules (22) sur la bande de matériau thermoplastique (10) et pour fixer la bande à opercules sur le bord de chaque récipient (1) de manière à former un opercule par récipient, des moyens (28) pour découper les récipients et leurs opercules de la bande de matériau thermoplastique (10) et de la bande à opercules (22) et des moyens (30) pour séparer les récipients et leurs opercules desdites bandes, **caractérisée en ce que** l'installation comprend : une station de découpe préliminaire (32) disposée, dans le sens (F) d'avancement de la bande de matériau thermoplastique (10), en amont des moyens (23, 26, 27) pour appliquer la bande à opercules (22) sur ladite bande, cette station comprenant un outil de découpe préliminaire (33) apte à réaliser, pour chaque récipient (1) une découpe préliminaire (36) dans la bande de matériau thermoplastique (10) définissant une partie du pourtour du bord du récipient;
en outre, disposés en aval des moyens (23, 26, 27) pour appliquer la bande à opercules (22) sur la bande de matériau thermoplastique (10), des moyens pour réaliser, pour chaque récipient, une découpe traversante (37) de l'ensemble constitué par la bande de matériau thermoplastique (10) et par la bande à opercules (22) selon une portion de la partie restante du pourtour du récipient et des moyens pour réaliser, pour chaque récipient, une découpe complémentaire (41), qui traverse seulement la bande à opercules (22), qui est raccordée à ladite découpe traversante (37) et qui délimite pour chaque récipient, une portion de la bande à opercules (22) s'étendant au-delà de la découpe préliminaire (36) de manière à former une languette (42) de préhension de l'opercule du récipient.

11. Installation selon la revendication 10, **caractérisée en ce qu'**elle comprend une station de découpe finale (28) ayant un outil de découpe (46) et un contre-outil (47) respectivement disposés au-dessus et en dessous de l'ensemble constitué par la bande de matériau thermoplastique (10) et par la bande à opercules (22), l'outil de découpe (46) présentant une arête de découpe traversante (50) apte à coopérer avec ledit contre-outil (47) pour former la découpe traversante (37) et une arête de découpe complémentaire (51) qui est disposée en retrait vers le haut par rapport à l'arête de découpe traversante (50).

12. Installation selon la revendication 11, **caractérisée en ce que** l'ensemble constitué par l'arête de découpe traversante (50) et par l'arête de découpe complémentaire (51) forme une arête continue délimitant un contour fermé.

13. Installation selon l'une quelconque des revendications 10 à 12, **caractérisée en ce que** l'outil de découpe préliminaire (32) présente une arête de découpe préliminaire délimitant une ligne ouverte.

14. Installation selon l'une quelconque des revendications 10 à 13, **caractérisée en ce que** la station de découpe préliminaire (32) est disposée en amont de la station de thermoformage (16) dans le sens (F) d'avancement de la bande de matériau thermoplastique (10).

15. Installation selon l'une quelconque des revendications 10 à 13, **caractérisée en ce que** la station de découpe préliminaire est disposée en aval de la station du thermoformage (16) dans le sens d'avancement de la bande thermoplastique.

16. Installation selon l'une quelconque des revendications 10 à 15, **caractérisée en ce qu'**elle comprend des moyens pour rabattre la languette (42) de préhension de l'opercule (40) de chaque récipient (1) contre la paroi du récipient.

## Claims

1. A method of fabricating and filling receptacles, the method comprising the steps of making receptacles (1) by thermoforming a strip of thermoplastic material (10), filling the receptacles, applying a capsule strip (22) on the strip of thermoplastic material, fixing the capsule strip to the edge of each receptacle (1) so as to form one capsule (40) per receptacle, cutting out the receptacles and their capsules from the strip of thermoplastic material (10) and the capsule strip (22), and separating the receptacles with their capsules from said strips, the method being **characterized in that**, prior to applying the capsule strip (22) to the strip of thermoplastic material (10), a preliminary cut (36) is made in the strip of thermoplastic material (10) for each receptacle so as to define a portion of the outline of the edge of the receptacle, wherein during the step of cutting out the receptacles (1) and their capsules (40), a through cut (37) is made for each receptacle through the assembly constituted by the strip of thermoplastic material (10) and by the capsule strip (22) over a portion of the remainder of the outline of the receptacle, and a complementary cut (41) passing through the capsule strip (22) alone is also made, which complementary cut is connected to said through cut (37) and thus defines for each receptacle a portion of the capsule strip that extends beyond the preliminary cut so as to form a pull tab (42) for the capsule of the receptacle.

2. The method according to claim 1, **characterized in that** the preliminary cut (36) is formed by an incision.

3. The method according to claim 1 or claim 2, **characterized in that** the through cut (37) and the complementary cut (41) are made simultaneously.

4. The method according to any one of claims 1 to 3, **characterized in that** the preliminary cut (36) is made before thermoforming the receptacles.

5. The method according to any one of claims 1 to 3, **characterized in that** the preliminary cut (36) is made after thermoforming the receptacles.

6. The method according to any one of claims 1 to 5, **characterized In that** the cuts are made in such a manner that the preliminary cut (36) and the complementary cut (41) meet substantially tangentially with the through cut (37).

7. The method according to any one of claims 1 to 6, **characterized in that** the pull tabs (42) are folded towards the walls of the receptacles.

8. The method according to any one of claims 1 to 7, **characterized in that** for receptacles that are to be presented individually, the through cut (37) is formed over the entire remaining outline of each receptacle (1).

9. The method according to any one of claims 1 to 7, **characterized in that** for receptacles (1) that are designed to be presented in groups of at least two receptacles interconnected by at least one bridge, the through cut is made over the entire remainder of the outline of each receptacle with the exception of said bridge, and the complementary cut is made along a line including said bridge.

10. An installation for fabricating and filling receptacles, the installation comprising a station (16) for thermoforming receptacles in a strip (10) of thermoplastic material, a station (17) for filling the receptacles, means (23, 26, 27) for applying a capsule strip (22) to the strip (10) of thermoplastic material and for fixing the capsule strip to the edge of each receptacle (1) in such a manner as to form one capsule per receptacle, means (28) for cutting out the receptacles and their capsules from the strip (10) of thermoplastic material and the capsule strip (22), and means (30) for separating the receptacles with their capsules from said strips, the installation being **characterized in that** it further comprises a preliminary cutting station (32) disposed upstream in the direction (F) of advance of the strip (10) of thermoplastic material relative to the means (23, 26, 27) for applying said capsule strip (22) onto said strip of thermoplastic material, said station including a preliminary cutting tool (33) suitable, for each receptacle (1), for making a preliminary cut (36) through the strip (10) of thermoplastic material defining a portion of the outline of the edge of the receptacle, the installation further comprising, disposed downstream from the means (23, 26, 27) for applying the capsule strip (22) to the strip (10) of thermoplastic material, means for making a through cut (37) for each receptacle through the assembly constituted by the strip (10) of thermoplastic material and by the capsule strip (22) over a portion of the remainder of the outline of the receptacle, and means for making a complementary cut (41) for each receptacle, the complementary cut passing through the capsule strip (22) only, the complementary cut being connected to said through cut (37) and defining, for each receptacle, a portion of the capsule strip (22) extending beyond the preliminary cut (36) so as to form a pull tab (42) for the capsule of the receptacle.

11. The installation according to claim 10, **characterized in that** it includes a final cutting station (28) having a cutting tool (46) and a backing tool (47) disposed respectively above and below the assembly constituted by the strip (10) of thermoplastic material and by the capsule strip (22), the cutting tool (46) presenting a through cutting edge (22) suitable for co-operating with said backing tool (47) to form the through cut (37) and a complementary cutting edge (51) which is set back upwards from the edge of the through cutting edge (50).

12. The installation according to claim 11, **characterized in that** the assembly constituted by the through cutting edge (50) and by the complementary cutting edge (51) forms a continuous edge defining a closed outline.

13. The installation according to any one of claims 10 to 12, **characterized in that** the preliminary cutting tool (32) presents a preliminary cutting edge that defines an open-ended line.

14. The installation according to any one of claims 10 to 13, **characterized in that** the preliminary cutting station (32) is disposed upstream from the thermoforming station (16) In the advance direction (F) of the strip (10) of thermoplastic material.

15. The installation according to any one of claims 10 to 13, **characterized in that** the preliminary cutting station is disposed downstream from the thermoforming station (16) in the advance direction of the thermoplastic strip.

16. The installation according to any one of claims 10 to 15, **characterized in that** it includes means for folding down the pull tab (42) of the capsule (40) of each receptacle (1) against the wall of the receptacle.

## Patentansprüche

1. Verfahren zur Herstellung und Befüllung von Behältern, bei dem Behälter (1) durch Wärmeformung aus einem Band (10) thermoplastischen Materials hergestellt werden, diese Behälter befüllt (17) werden, ein Band (22) mit Verschlußfolien auf das Band thermoplastischen Materials aufgebracht wird, das Band mit Verschlußfolien am Rand jedes Behälters (1) befestigt wird, um eine Verschlußfolie (40) pro Behälter zu bilden, die Behälter und ihre Verschlußfolien aus dem Band (10) thermoplastischen Materials und dem Band (22) mit Verschlußfolien ausgeschnitten werden, und die Behälter und ihre Verschlußfolien von den Bändern getrennt werden, **dadurch gekennzeichnet, daß** vor dem Aufbringen des Bandes mit Verschlußfolien (22) auf das Band (10) thermoplastischen Materials für jeden Behälter ein vorbereitendes Ausschneiden (36) aus dem Band (10) thermoplastischen Materials erfolgt, das einen Teil des Umfangs des Randes des Behälters definiert, daß beim Ausschneiden der Behälter (1) und ihrer Verschlußfolien (40) für jeden Behälter ein durchgehendes Ausschneiden (37) der Einheit, die von dem Band (10) thermoplastischen Materials und dem Band (22) mit Verschlußfolien gebildet ist, entlang eines Abschnitts des restlichen Teils des Umfangs des Behälters erfolgt und ein ergänzendes Ausschneiden (41) durchgeführt wird, das nur durch das Band (22) mit Verschlußfolien, welches mit dem durchgehenden Ausschnitt (37) verbunden ist, hindurchgeht und für jeden Behälter einen Abschnitt des Bandes (22) mit Verschlußfolien begrenzt, der sich über den Vorausschnitt hinaus erstreckt, um eine Grifflasche (42) für die Verschlußfolie des Behälters zu bilden.

2. Verfahren nach Anspruch 1, **dadurch gekennzeichnet, daß** das vorbereitende Ausschneiden (36) durch einen Einschnitt erfolgt.

3. Verfahren nach Anspruch 1 oder 2, **dadurch gekennzeichnet, daß** das durchgehende Ausschneiden (37) und das ergänzende Ausschneiden (41) gleichzeitig erfolgen.

4. Verfahren nach einem der Ansprüche 1 bis 3, **dadurch gekennzeichnet, daß** das vorbereitende Ausschneiden (36) vor dem Wärmeformen der Behälter erfolgt.

5. Verfahren nach einem der Ansprüche 1 bis 3, **dadurch gekennzeichnet, daß** das vorbereitende Ausschneiden (36) nach dem Wärmeformen der Behälter erfolgt.

6. Verfahren nach einem der Ansprüche 1 bis 5, **dadurch gekennzeichnet, daß** das Ausschneiden derart erfolgt, daß der vorbereitende Ausschnitt (36) und der ergänzende Ausschnitt (41) im wesentlichen tangential an den durchgehenden Ausschnitt (37) anschließen.

7. Verfahren nach einem der Ansprüche 1 bis 6, **dadurch gekennzeichnet, daß** die Grifflaschen (42) zur Wand der Behälter umgelegt werden.

8. Verfahren nach einem der Ansprüche 1 bis 7, **dadurch gekennzeichnet, daß**, da die Behälter einzeln präsentiert werden sollen, der durchgehende Ausschnitt (37) auf dem gesamten Umfang jedes Behälters (1) des restlichen Teils erfolgt.

9. Verfahren nach einem der Ansprüche 1 bis 7, **dadurch gekennzeichnet, daß**, da die Behälter (1) in Gruppen von mindestens zwei miteinander durch mindestens eine Verbindungslinie verbundenen Behältern präsentiert werden sollen, der durchgehende Ausschnitt auf dem gesamten restlichen Teil des Umfangs jedes Behälters mit Ausnahme der Verbindungslinie erfolgt, und der ergänzende Ausschnitt entlang einer Linie umfassend diese Verbindungslinie erfolgt.

10. Anlage zur Herstellung und Befüllung von Behältern, umfassend eine Station (16) zur Wärmeformung von Behältern aus einem Band (10) thermoplastischen Materials, eine Station (17) zum Befüllen der Behälter, Mittel (23, 26, 27) um ein Band (22) mit Verschlußfolien auf das Band (10) thermoplastischen Materials aufzubringen und das Band mit Verschlußfolien am Rand jedes Behälters (1) zu befestigen, um eine Verschlußfolie pro Behälter zu bilden, Mittel (28), um die Behälter und ihre Verschlußfolien aus dem Band (10) thermoplastischen Materials und dem Band mit Verschlußfolien (22) auszuschneiden, und Mittel (30), um die Behälter und ihre Verschlußfolien von den Bändern zu trennen, **dadurch gekennzeichnet, daß** die Anlage eine Station zum vorbereitenden Ausschneiden (32) umfaßt, die in Vorschubrichtung (F) des Bandes (10) thermoplastischen Materials stromaufwärts zu den Mitteln (23,2 6, 27) vorgesehen ist, um das Band (22) mit Verschlußfolien auf das Band (10) thermoplastischen Materials aufzubringen, wobei diese Station ein Werkzeug zum vorbereitenden Ausschneiden (33) umfaßt, das für jeden Behälter (1) ein vorbereitendes Ausschneiden (36) aus dem Band (10) thermoplastischen Materials durchführen kann, das einen Teil des Umfangs des Randes des Behälters definiert, daß sie ferner stromabwärts zu den Mitteln (23, 26, 27) zum Aufbringen des Bandes (22) mit Verschlußfolien auf das Band (10) thermoplastischen Materials Mittel umfaßt, um für jeden Behälter ein durchgehendes Ausschneiden (37) der Einheit, die von dem Band (10) thermoplastischen Materials und dem Band (22) mit Verschlußfolien gebildet ist, entlang eines Abschnitts des restlichen Teils des Umfangs des Behälters durchzuführen, und Mittel, um für jeden Behälter ein ergänzendes Ausschneiden (41) durchzuführen, das nur durch das Band (22) mit Verschlußfolien, welches mit dem durchgehenden Ausschnitt (37) verbunden ist, hindurchgeht und für jeden Behälter einen Abschnitt des Bandes (22) mit Verschlußfolien begrenzt, der sich über den vorbereitenden Ausschnitt (36) hinaus erstreckt, um eine Grifflasche (42) für die Verschlußfolie des Behälters zu bilden.

11. Anlage nach Anspruch 10, **dadurch gekennzeichnet, daß** sie eine Endausschneidestation (28) mit einem Ausschneidewerkzeug (46) und einem Gegenwerkzeug (47) umfaßt, die über bzw. unter der Einheit angeordnet sind, die von dem Band (10) thermoplastischen Materials und dem Band (22) mit Verschlußfolien gebildet ist, wobei das Ausschneidwerkzeug (46) eine Durchgangsschneidkante (50), die mit dem Gegenwerkzeug (47) zusammanwirken kann, um den durchgehenden Ausschnitt (37) zu bilden, und eine Ergänzungsschneidkante (51) umfaßt, die nach oben in Bezug auf die Durchgangsschneidkante (50) zurückgesetzt angeordnet ist.

12. Anlage nach Anspruch 11, **dadurch gekennzeichnet, daß** die Einheit, die von der Durchgangsschneidkante (50) und der Ergänzungsschneidkante (51) gebildet ist, eine kontinuierliche Kante bildet, die eine geschlossene Kontur begrenzt.

13. Anlage nach einem der Ansprüche 10 bis 12, **dadurch gekennzeichnet, daß** das Werkzeug (33) zum vorbereitenden Ausschneiden eine Vorschneidkante aufweist, die eine offene Linie begrenzt.

14. Anlage nach einem der Ansprüche 10 bis 13, **dadurch gekennzeichnet, daß** die Station (32) zum vorbereitenden Ausschneiden stromaufwärts zur Wärmeformungsstation (16) in Vorschubrichtung (F) des Bandes (10) thermoplastischen Materials angeordnet ist.

15. Anlage nach einem der Ansprüche 10 bis 13, **dadurch gekennzeichnet, daß** die Station zum vorbereitenden Ausschneiden stromabwärts zur Wärmeformungsstation (16) in Vorschubrichtung des Bandes thermoplastischen Materials angeordnet ist.

16. Anlage nach einem der Ansprüche 10 bis 15, **dadurch gekennzeichnet, daß** sie Mittel umfaßt, um die Grifflasche (42) der Verschlußfolie (40) jedes Behälters (1) an die Wand des Behälters umzulegen.
